# FASCICULE DE BREVET EUROPEEN

(11) **EP 2 861 004 B1**
(45) Date de publication et mention de la délivrance du brevet: **07.03.2018**
(21) Numéro de dépôt: 14188187.0
(22) Date de dépôt: 08.10.2014
(51) Int. Cl.: H04W 12/06, H04W 12/08, H04W 4/04, H04W 4/20

(54) **Sécurité d'une fourniture de contenus dans un moyen de transport**
Sicherung einer Datenlieferung in einem Transportmittel
Security of content provided in a means of transport

(30) Priorité: 10.10.2013 FR 1359842
(43) Date de publication de la demande: 15.04.2015
(73) Titulaire: Orange, 75015 Paris (FR)
(72) Inventeur: Puharre, Michel, 92320 Chatillon (FR); Perez, Carlos Arturo, 75012 Paris (FR)
(74) Mandataire: Cabinet Plasseraud

(56) Documents cités:
- WO-A2-2008/022272
- WO-A2-2008/026038
- US-A1- 2004 259 500
- US-A1- 2013 054 375
- US-A1- 2013 130 686

## Description

La présente invention concerne le domaine de la gestion de la fourniture de contenus (animation d'un réseau social, service de vidéo en ligne, fourniture d'un contenu payant de type images de rencontres sportives ou « Ligue 1 » en France, ou autres).

Elle concerne plus particulièrement la fourniture de tels contenus dans un réseau local auquel peuvent se connecter les passagers d'un moyen de transport (comme par exemple un moyen de transport en commun tel qu'un train grande ligne, banlieue, ou urbain, un bus, une voiture, etc.). En effet, pour l'exemple des trains de grandes lignes et à grande vitesse typiquement, le très haut débit mobile qu'offre le service 4G sur réseau LTE permet des vitesses de transfert entre stations de base d'un réseau cellulaire (ou « handover ») appropriées pour la réception de données en continu, permettant typiquement d'offrir des services de types « vidéo à la demande » ou suivre des rencontres de football en direct de « Ligue 1 » en France, ou encore d'animer un réseau social entre les passagers du train et échanger des informations sur les villes de destination, ou fournir aux passagers du contenu informatif, via ce réseau social, sur les villes de destination.

On peut prévoir d'imprimer sur un coupon titre de transport, comme un coupon de billet de train ou sur une page de réservation sur Internet un code d'accès, par exemple un nom de connexion (ou « login »), suivi d'un mot de passe (ou « password »), à entrer dans son terminal pour connecter ce dernier à une passerelle du moyen de transport, laquelle passerelle est reliée à un serveur de contenus via un réseau étendu (et via les stations de base précitées d'un réseau cellulaire).

Toutefois, un passager malveillant pourrait communiquer ces données avant de monter dans le moyen de transport à un tiers capable d'accéder à ces contenus en utilisant les mêmes « login et password ».

La présente invention vient améliorer la situation.

L'état de la technique le plus proche comporte les documents WO 2008/022272, US 2013/130686, US 2013/054375, WO 2008/026038 et US 2004/259500.

Elle propose à cet effet un procédé de sécurisation d'une transmission d'un contenu numérique à destination d'un terminal embarqué dans un moyen de transport et relié à une passerelle via un réseau local. Dans ce procédé, la passerelle transmet une requête du contenu, issue du terminal, et ajoute à cette requête un identifiant de passerelle.

Ainsi, la vérification des droits d'accès au contenu dont peut disposer un utilisateur du terminal, passager dans le moyen de transport, peut se baser à la fois :
- sur des données de ces droits d'accès qui peuvent être présents par exemple dans la requête, et
- sur l'identifiant de la passerelle, laquelle est généralement associée au moyen de transport qui l'embarque.

Par exemple, un serveur de vérification peut stocker préalablement des données sur les conditions d'accès d'un contenu à un futur passager du moyen de transport (avec un identifiant du moyen de transport typiquement) et vérifier, outre les données d'accès présentes dans la requête, une cohérence entre l'identifiant de passerelle et l'identifiant du moyen de transport dans lequel l'utilisateur du terminal est déclaré être passager.

Par ailleurs, si le moyen de transport effectue un trajet prédéterminé (par exemple régulièrement sur une ligne particulière), il est possible d'associer un contenu spécifique à ce trajet, et plus particulièrement à la passerelle du moyen de transport qui effectue ce trajet. Ainsi, dans une telle réalisation notamment, le contenu requis peut être sélectionné parmi une pluralité de contenus, au moins en fonction de l'identifiant de passerelle. A cet effet, il est possible :
- de stocker plusieurs contenus dans une base (chaque contenu étant spécifique par exemple à une ville de destination, notamment dans le cadre de données de réseau social contenant des informations sur cette ville), et
- de sélectionner un contenu dans cette base en fonction de l'identifiant de la passerelle que comporte la requête, et renvoyer ce contenu sélectionné au terminal pour satisfaire sa requête.

Une telle réalisation est possible dès lors que la passerelle permet d'identifier le moyen de transport lui-même (les trajets prévus de ce dernier pouvant être stockés en outre dans une mémoire consultable).

Il viendrait naturellement à un homme du métier d'affecter une période de validité aux droits d'accès d'un passager dans un moyen de transport effectuant un trajet donné, entre un instant de départ et un instant d'arrivée prévus. Toutefois, dans le cas de retards avant d'arriver au lieu de destination par exemple, il n'est pas acceptable que le passager disposant de droits sur un contenu n'ait plus accès à ce contenu après l'instant d'arrivée prévu.

L'invention vient remédier à cette situation notamment, dès lors qu'elle propose de faire en sorte que le contenu peut être fourni au passager du moyen de transport, tant que la requête du contenu transite par la passerelle associée à ce moyen de transport.

La présente invention, contrairement aux accès connus via un code d'accès, permet de gérer une plage ou période de validité d'accès au contenu. En outre, pour des passagers disposant d'abonnements et voyageant régulièrement dans le même moyen de transport, il peut simplement être affecté un droit d'accès sans réserve liée à un quelconque instant d'accès.

Ainsi, dans un mode de réalisation dans lequel le contenu est destiné à un passager du moyen de transport, utilisateur d'un terminal, et des droits d'accès sécurisé au contenu sont affectés à ce passager, la passerelle peut :
- recevoir du terminal du passager la requête du contenu avec des données d'accès du passager, et
- transmettre la requête à un serveur de vérification distant, avec les données d'accès d'une part, et l'identifiant de passerelle d'autre part.

Selon une architecture possible de mise en oeuvre de l'invention, la passerelle peut être reliée au terminal via un réseau local, d'une part, et en outre au serveur de vérification via un réseau étendu, d'autre part. Le serveur de vérification peut être quant à lui relié à un serveur délivrant le contenu précité pour vérifier les données d'accès et l'identifiant de passerelle avant la transmission du contenu au terminal. Bien entendu, dans une réalisation possible, le serveur de contenu et le serveur de vérification peuvent être une même entité serveur, en pratique.

Dans une réalisation particulière, le serveur de vérification stocke des données du passager comportant un identifiant du moyen de transport, pour comparaison avec les données d'accès reçues dans la requête. Ainsi, la passerelle étant associée au moyen de transport, elle a un identifiant de passerelle propre, correspondant à un identifiant du moyen de transport. Le serveur de vérification peut vérifier alors une cohérence entre :
- d'une part, l'identifiant de passerelle associée au moyen de transport, et
- d'autre part, les données d'accès du passager de ce même moyen de transport.

Dans une telle réalisation notamment, le serveur de vérification peut alors effectuer les étapes:
- sur obtention d'une information de réservation d'un billet d'un passager dans un moyen de transport (au moment de ou juste après la réservation typiquement), déterminer si une mise à disposition d'un contenu dans ce moyen de transport a été accordée pour ce passager (en obtenant par exemple d'un serveur une information selon laquelle le passager a payé pour accéder à ce contenu, ou ce passager est abonné à un service d'accès à ce contenu) et, en cas de détermination positive, affecter des données de droit d'accès à ce contenu à ce passager et stocker en mémoire ces données en correspondance au moins d'un identifiant du moyen de transport,
- ensuite, lorsque le passager est dans le moyen de transport, sur réception d'une requête d'un contenu comportant un identifiant de passerelle, vérifier la validité de l'identifiant de passerelle en cherchant à identifier le moyen de transport dans lequel la passerelle est embarquée, et, après identification du moyen de transport, vérifier que les données d'accès au contenu sont enregistrées en correspondance d'un identifiant de moyen de transport correspondant au moyen de transport identifié par l'identifiant de passerelle, et
- sur vérification positive, en outre, des données d'accès présentes dans la requête, par comparaison avec les données d'accès préalablement enregistrées, décider de transmettre le contenu à destination du terminal.

Dans une réalisation où la passerelle est reliée au serveur de vérification via un réseau cellulaire avec une ou plusieurs stations de base relayant la requête. Le serveur de vérification peut, dans cette réalisation, stocker :
- d'une part une information de trajet du moyen de transport et,
- d'autre part une information de positions des stations de base.

Ainsi, la requête peut être reçue par le serveur de vérification avec un ou plusieurs identifiants d'une ou plusieurs stations de base respectives transmettant la requête. Avantageusement, le serveur de vérification peut vérifier en outre une cohérence entre la ou les stations de base identifiées dans la requête et le trajet présumé du moyen de transport.

Ainsi, dans ce mode de réalisation, le serveur de vérification peut s'appuyer sur :
- les données classiques d'accès du passager,
- l'identifiant de la passerelle, et
- en outre, les identifiant de stations de base relayant la requête.

Typiquement, si, par exemple au lieu de départ ou de destination, un utilisateur frauduleux dispose des données d'accès du passager, il lui suffit d'émettre la requête depuis ce lieu en se connectant à la passerelle pour récupérer le contenu. Ce mode de réalisation propose alors de surmonter cette difficulté en s'assurant que la requête est transmise via une ou plusieurs stations de base après le lieu de départ et conforme à un trajet donné du moyen de transport.

Par exemple, de façon générale, le contenu peut être accessible pour le passager entre un instant de départ du moyen de transport d'un lieu de départ du passager et un instant d'arrivée à un lieu de destination du passager.

Ainsi, dans ce cas, le contenu est accessible pour ce passager :
- si la requête comporte un identifiant de station de base située par exemple après le lieu de départ dans le trajet du moyen de transport, et
- si la requête comporte un identifiant de station de base située avant le lieu de destination dans le trajet du moyen de transport.

Dans une réalisation présentée ci-avant, le contenu peut comporter des données d'un réseau social animé pour des passagers du moyen de transport. Ainsi, dans cette réalisation les données du réseau social peuvent être envoyées au moins en fonction de stations de base identifiées dans des requêtes transmises par ces stations de base. Typiquement, pour un moyen de transport effectuant un trajet entre une ville A et une ville B de destination, des informations sur cette ville B peuvent être communiquées avec les données du réseau social, tant que les stations de base relayant les requêtes sont identifiées entre les villes A et B. Si le moyen de transport poursuit son trajet vers une ville C ensuite, des informations sur cette ville C peuvent être communiquées avec les données du réseau social, si les stations de base relayant les requêtes sont identifiées entre les villes B et C.

En particulier, dans cette réalisation, la base des index (les liens vers des « amis » du réseau social) d'un passager disposant de droits d'accès peut contenir le moyen de transport (et en particulier son identifiant), le contrôleur du moyen de transport (un page de réseau du contrôleur), la ville de départ (sa page de réseau social), la ville d'arrivée, la page de réseau social de l'exploitant du moyen de transport (par exemple la SNCF™ en France pour des trains) et d'autres fournisseurs de services (agence de location de véhicules, etc.). En outre, pendant le trajet du moyen de transport, d'autres passagers qui veulent bénéficier aussi du réseau et de ses services peuvent s'ajouter comme « amis ».

Néanmoins, à l'arrivée du moyen de transport, la base des index (les liens vers les pages ou amis précités) disparait et n'est plus stockée par le serveur vérification par exemple. Il est alors impossible de se connecter après l'arrivée à des personnes ou des services (avec ou sans « login-password ») car la base des index du passager (qu'utilise habituellement un moteur d'indexation pour un service de réseau social) n'existe plus.

Ainsi, lors d'un évènement limité dans le temps tel que le trajet du passager, ce dernier se voit proposer l'accès à un réseau social éphémère lié à l'évènement. Un code d'accès (login-password) au réseau social temporaire et éphémère suffit. Le service de réseau social disparait après la fin de l'évènement.

Ainsi, dans une réalisation générale, le contenu numérique précité peut comporter des données d'un réseau social animé pour des passagers du moyen de transport, et une base des données d'index attribuée à un passager disposant de droits d'accès est supprimée à la fin d'un trajet du moyen de transport. Cette opération peut être gérée par le serveur de vérification précité.

La présente invention vise aussi une passerelle pour la mise en oeuvre du procédé ci-avant, et destinée à être embarquée dans un moyen de transport. Elle comporte en particulier des moyens informatiques (typiquement une mémoire et un processeur) agencés pour ajouter un identifiant de passerelle à une requête de contenu reçue d'un terminal auquel est reliée la passerelle via un réseau local.

La présente invention vise aussi un programme informatique comportant des instructions pour la mise en oeuvre du procédé, lorsque ce programme est exécuté par un processeur de la passerelle précitée.

La présente invention vise aussi un serveur pour la vérification des droits d'accès du passager comme indiqué ci-avant. Il s'agit en particulier d'un serveur de vérification de droit d'accès à un contenu numérique, d'un passager d'un moyen de transport embarquant une passerelle, comportant des moyens informatiques (typiquement une mémoire de stockage, un processeur et une mémoire de travail pour traiter les requêtes) pour, sur réception d'une requête du contenu issue d'un terminal du passager et transmise par la passerelle :
- comparer des données d'accès du passager audit contenu présentes dans la requête, à des données préalablement stockées dans une mémoire accessible au serveur de vérification, lesdites données préalablement stockées comportant un identifiant de moyen de transport,
- comparer l'identifiant de moyen de transport à un identifiant de passerelle présente dans la requête, et vérifier une correspondance entre l'identifiant de passerelle et l'identifiant de moyen de transport,
- en cas de correspondance entre les données d'accès et les données préalablement stockées d'une part, et de correspondance entre l'identifiant de passerelle et l'identifiant de moyen de transport d'autre part, décider de transmettre le contenu à destination du terminal.

La présente invention vise aussi un programme informatique comportant des instructions pour la mise en oeuvre du procédé de vérification, lorsque ce programme est exécuté par un processeur du serveur de vérification précité.

D'autres caractéristiques et avantages de l'invention apparaîtront à l'examen de la description détaillée ci-après, et des dessins annexés sur lesquels :
- la figure 1 illustre un exemple de réalisation d'un système intégrant une passerelle GW et un serveur de vérification SER selon l'invention ;
- la figure 2 illustre un exemple de procédé au sens de l'invention ;
- la figure 3 illustre schématiquement une passerelle GW au sens de l'invention ;
- la figure 4 illustre schématiquement un serveur de vérification SER au sens de l'invention ;
- la figure 5 détaille les opérations mises en oeuvre au test T4 de la figure 2.

La description ci-dessous sera illustrée, sauf mention contraire, avec l'exemple d'un train se déplaçant notamment entre une gare de départ et une gare d'arrivée. L'homme du métier pourra généraliser les enseignements du présent dispositif à d'autres moyens de transport, notamment un moyen de transport en commun comme un bus, ou plus largement toute forme de véhicule ou moyen de transport comme une voiture.

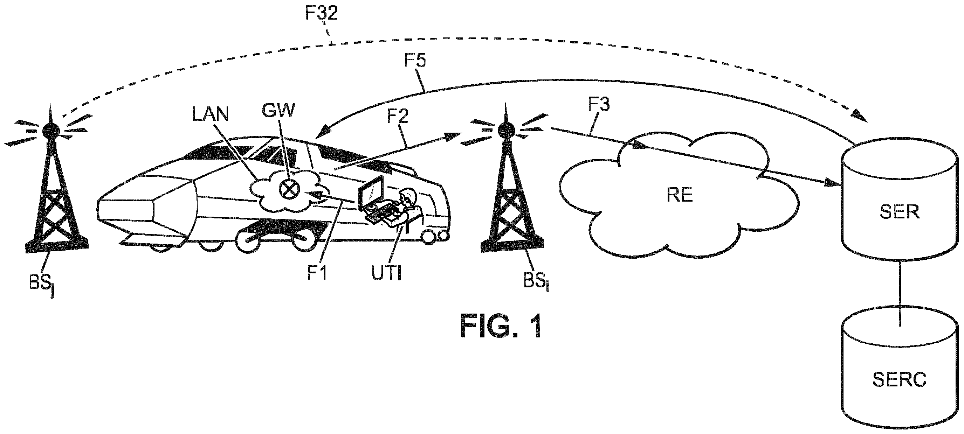

On se réfère à la figure 1 sur laquelle une passerelle GW transmet une requête d'un utilisateur UTI issue de son terminal TER à un serveur de vérification SERV, le terminal recevant en retour un contenu numérique (multimédia par exemple) s'il est fait droit à la requête de l'utilisateur.

En particulier, l'utilisateur UTI est un passager d'un train équipé d'une telle passerelle GW. Avec l'offre de la 4G, des stations de base BS sont capables de relayer une communication par transfert de communication ou « handover » avec des vitesses compatibles avec celles des trains à grande vitesse (jusqu'à 350 km/h).

Dès lors, il est possible d'animer un réseau interne LAN dans le train (par exemple par communication WiFi), à partir de la passerelle GW. La passerelle GW est reliée à un réseau externe, étendu, via les stations de base BSi, BSj, assurant une connexion 4G/LTE à haut débit. La connexion au réseau étendu RE permet de se connecter au serveur de contenus SERC (figure 1).

Ainsi, un utilisateur UTI disposant d'un terminal de communication embarqué dans le train et connecté au réseau LAN, peut détenir un droit d'accès à des données de contenu que délivre le serveur SERC et qui peuvent être par exemple les données d'un réseau social, d'un contenu multimédia, ou autres. A cet effet, des données de droit d'accès sont imprimées par exemple sur son billet de train ou sur un coupon de réservation via Internet, ou autres. Il peut s'agir par exemple de données de login et de mot de passe pour se connecter au serveur SER de vérification et accéder ainsi aux données de contenu. Les serveurs de vérification SER et de contenus SERC peuvent être une même entité serveur, ou deux entités distinctes. Néanmoins, dans la suite, il est considéré indistinctement une même entité serveur SER vérifiant les droits d'accès et délivrant le contenu requis en cas de validité des droits d'accès.

Selon une fraude possible, l'utilisateur UTI peut communiquer ses login et password de façon malveillante à un tiers qui pourrait se connecter au serveur SER et obtenir ainsi les données du contenu requis. Pour éviter cette possibilité, l'invention prévoit une association de la requête d'obtention des données à un identifiant de la passerelle GW, lorsque celle-ci route la requête vers le serveur SER. Ainsi, le serveur vérifie que les login et password sont bien cohérents avec l'identifiant de la passerelle GW reçu dans la requête.

Par ailleurs, un tiers disposant des login et password et pouvant se connecter par WiFi au réseau local LAN pourrait (par une écoute malveillante des requêtes envoyées) récupérer l'identifiant de la passerelle GW et obtenir les données du serveur SER. L'invention prévoit alors, dans un mode de réalisation particulier, d'associer en outre à la requête d'obtention des données du serveur l'identifiant d'au moins une station de base BSi, lorsque celle-ci contribue à router la requête vers le serveur SER. Ainsi, le serveur vérifie que l'identifiant de passerelle GW est bien cohérent, pour un trajet prédéterminé (Paris-Bordeaux par exemple), avec l'identifiant de station de base BSi reçu dans la requête (la station étant bien à proximité d'une ligne de chemin de fer entre Paris et Bordeaux). Quand bien même le tiers malveillant obtiendrait (par exemple par une attaque de type « Man In the Middle ») l'identifiant d'une station de base BSi, il deviendrait fastidieux d'obtenir tous les identifiants de toutes les stations de base sur un trajet. En outre, dans une réalisation plus particulière, le serveur peut vérifier une cohérence dans la succession des stations de base (BSi, puis BSj, etc.) qui assurent le portage de la communication de la requête ou des requêtes successives.

Ainsi, pour chaque trajet géré par le serveur de vérification SER, une association préalable est réalisée, entre ce trajet et les identifiants des stations de base couvrant ce trajet, ces stations de base étant donc susceptibles de router la requête de la passerelle vers le serveur SER. Cette association est ensuite stockée en relation avec un identifiant pour le trajet. Elle permet la vérification ultérieure de la cohérence entre la ou les stations de base identifiées dans la requête et le trajet présumé du moyen de transport, identifié notamment par l'identifiant de la passerelle.

Dans une réalisation avantageuse, l'invention utilise aussi l'identifiant de station de base pour déterminer quand peut commencer et respectivement se terminer la mise à disposition des données du serveur : par exemple, lorsque la première station de base au premier départ du train couvre la passerelle sur un trajet donné et respectivement lorsque la dernière station de base couvre la passerelle à l'arrivée en gare du terminus. Une telle réalisation permet de déterminer à quels moments précis la mise à disposition des données du serveur peut avoir lieu, sans faire intervenir d'autres moyens que ceux présentés sur le schéma de la figure 1. Bien entendu, dans une variante, un personnel du train ou un chef de gare peut envoyer une information de départ/d'arrivée du train, cette information étant transmise au serveur pour démarrer ou arrêter la mise à disposition des données du serveur.

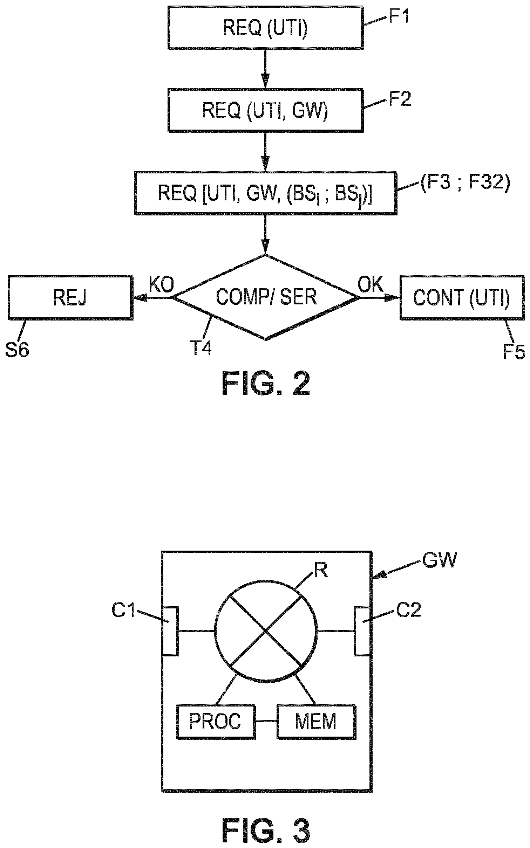

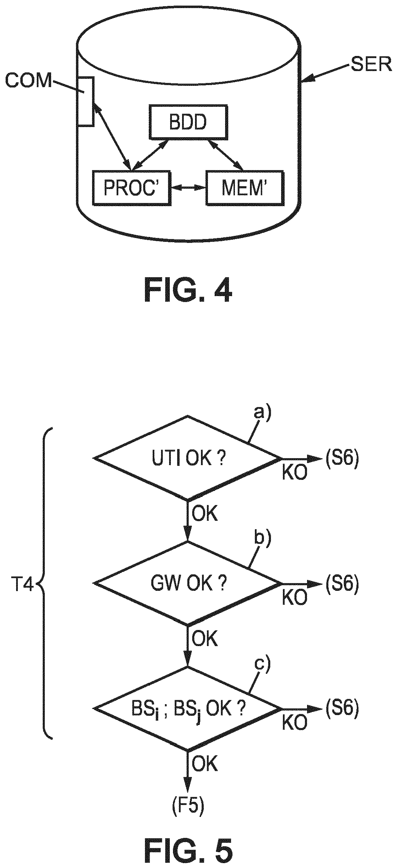

Ainsi, en référence maintenant à la figure 2, selon une première étape F1, le terminal TER, d'un passager UTI dans le train, émet une requête de contenu REQ(UTI) comportant des données de droits d'accès du passager UTI, via le réseau local LAN et à destination de la passerelle GW (flèche F1 de la figure 1). Selon une deuxième étape F2, la passerelle GW, sur réception de la requête REQ(UTI), y ajoute son identifiant de passerelle GW et transmet la requête ainsi modifiée REQ(UTI, GW) à une BSi ou plusieurs (BSi ; BSj) stations de base pour que la requête du passager soit transmise au serveur SER via le réseau étendu RE. A l'étape F3 (ou aux étapes F3 et F32), chaque station de base BSi, BSj, relayant la requête de contenu ajoute son identifiant à la requête pour générer une requête REQ[UTI, GW, (BSi ; BSj)] comportant toutes les informations sur le routage de la requête qui permet au serveur de vérification, au test T4 de la figure 2, de :
a) comparer les données d'accès de l'utilisateur UTI avec des données préalablement enregistrées dans une base de données BDD (figure 4) des droits d'accès, des passerelles, des trains embarquant ces passerelles et des stations de bases sur les trajets de ces trains ;
b) puis, grâce aux données de la base concernant ce passager UTI, déterminer le train dans lequel il est présumé être passager, et grâce à cette identification du train, vérifier si l'identifiant de passerelle GW reçu dans la requête est cohérent avec le train identifié ;
c) puis, grâce à l'identification du train, déterminer un trajet présumé du train et vérifier une cohérence de ce trajet avec les identifiants de stations de base BSi ; BSj, présents dans la requête.

En cas d'incohérence relevée au cours de l'une au moins des opérations a), b) et c) de la figure 5 illustrant le test global T4 effectué auprès du serveur de vérification SER, la requête est rejetée (étape S6 de la figure 2, issue de la flèche KO en sortie du test T4). Sinon (flèche OK en sortie du test T4 de la figure 2), le contenu requis par l'utilisateur UTI et noté CONT(UTI) sur la figure 2 peut être envoyé au terminal de l'utilisateur à l'étape F5.

La présente invention vise aussi une passerelle, illustrée sur la figure 3, et comportant par exemple un routeur R de type modem entre une interface de communication C1 avec le réseau local LAN et une interface de communication C2 avec le réseau étendu, ainsi qu'un processeur PROC et une mémoire de travail MEM programmée pour ajouter l'identifiant de passerelle GW aux requêtes de contenus reçus des terminaux TER via le réseau local LAN. La présente invention vise aussi le programme informatique stocké dans cette mémoire de travail MEM pour mettre en oeuvre cette étape portant la référence F2 sur la figure 2.

La présente invention vise aussi un serveur de vérification SER, illustré sur la figure 4, et comportant par exemple au moins une interface de communication COM via le réseau étendu RE, une mémoire de stockage de la base de données précitée BDD, un processeur PROC' et une mémoire de travail MEM' pour vérifier les requêtes reçues de passerelles embarquées dans des trains, selon le test T4 décrit ci-avant. La présente invention vise aussi le programme informatique stocké dans cette mémoire de travail MEM' pour mettre en oeuvre le test T4 de la figure 2, détaillé ci-avant en référence à la figure 5. A ce titre, l'organigramme de la figure 5 peut illustrer l'algorithme général d'un tel programme.

Bien entendu, la présente invention ne se limite pas aux formes de réalisation décrites ci-avant à titre d'exemple ; elle s'étend à d'autres variantes.

Ainsi, par exemple, le contenu numérique précité peut être de diverse nature. Il peut s'agir de données d'un réseau social, d'un contenu vidéo ou audio, d'un contenu lié à une page web, etc.

De même, on a décrit ci-avant une application de l'invention dans un train. Néanmoins, elle peut s'appliquer aussi à une passerelle embarquée dans un véhicule ou plus généralement un moyen de transport dont un serveur connait l'identifiant de passerelle (par exemple un véhicule de location, un bus ou autre).

Par ailleurs, le moyen de transport peut être sédentaire, et associé à une localisation. Dans ce cas, on pourra parler de passerelle associée à, ou abritée, par un lieu fixe comme un stade, offrant l'accès à du contenu à un terminal présent dans ce lieu fixe.

## Revendications

1. Procédé de sécurisation d'une transmission d'un contenu numérique à destination d'un terminal embarqué dans un moyen de transport et relié à une passerelle (GW) via un réseau local (LAN), dans lequel la passerelle transmet une requête dudit contenu, issue du terminal,
**caractérisé en ce que** la passerelle est associée au moyen de transport et a un identifiant de passerelle correspondant à un identifiant du moyen de transport, et **en ce que** la passerelle ajoute à ladite requête ledit identifiant de passerelle (F2), en vue d'une vérification de cohérence au moins de l'identifiant de passerelle associée au moyen de transport (T4).

2. Procédé selon la revendication 1, dans lequel le contenu est destiné à un passager (UTI) du moyen de transport, utilisateur d'un terminal, et des droits d'accès sécurisé au contenu sont affectés audit passager, **caractérisé en ce que** la passerelle :
- reçoit du terminal du passager la requête du contenu avec des données d'accès du passager, et
- transmet ladite requête à un serveur de vérification distant, avec les données d'accès d'une part, et l'identifiant de passerelle d'autre part.

3. Procédé selon la revendication 2, **caractérisé en ce que** la passerelle est reliée en outre au serveur de vérification (SER) via un réseau étendu et le serveur de vérification est relié à un serveur (SERC) dudit contenu pour vérifier lesdites données d'accès et l'identifiant de passerelle avant la transmission du contenu au terminal.

4. Procédé selon l'une des revendications 2 et 3, **caractérisé en ce que** le serveur de vérification stocke des données du passager comportant un identifiant du moyen de transport, pour comparaison avec les données d'accès reçues dans la requête, et **en ce que** le serveur de vérification vérifie une cohérence entre :
- d'une part, l'identifiant de passerelle associée au moyen de transport, et
- d'autre part, les données d'accès du passager du même moyen de transport.

5. Procédé selon la revendication 4, **caractérisé en ce qu'**il comporte les étapes mises en oeuvre auprès du serveur de vérification :
- sur obtention d'une information de réservation d'un billet d'un passager dans un moyen de transport, déterminer si une mise à disposition d'un contenu dans ce moyen de transport a été accordée pour ce passager, et, en cas de détermination positive, affecter des données de droit d'accès audit contenu à ce passager et stocker lesdites données en correspondance au moins d'un identifiant du moyen de transport,
- sur réception d'une requête d'un contenu comportant un identifiant de passerelle, vérifier la validité de l'identifiant de passerelle en cherchant à identifier le moyen de transport dans lequel la passerelle est embarquée, et, après identification du moyen de transport, vérifier que les données d'accès au contenu sont enregistrées en correspondance d'un identifiant de moyen de transport correspondant au moyen de transport identifié par l'identifiant de passerelle, et
- sur vérification positive, en outre, des données d'accès présentes dans la requête, par comparaison avec les données d'accès préalablement enregistrées, décider de transmettre le contenu à destination du terminal.

6. Procédé selon l'une des revendications 2 à 5, **caractérisé en ce que**, la passerelle étant reliée au serveur de vérification via une ou plusieurs stations de base (BSi, BSj), et le serveur de vérification stockant, d'une part une information de trajet du moyen de transport et, d'autre part une information de positions des stations de base, la requête est reçue par le serveur de vérification avec un ou plusieurs identifiants d'une ou plusieurs stations de base respectives transmettant la requête, le serveur de vérification vérifiant en outre une cohérence entre la ou les stations de base identifiées dans la requête et le trajet du moyen de transport.

7. Procédé selon l'une des revendications précédentes, **caractérisé en ce que** le contenu est accessible pour ledit passager entre un instant de départ du moyen de transport d'un lieu de départ du passager et un instant d'arrivée à un lieu de destination du passager.

8. Procédé selon la revendication 6, **caractérisé en ce que** le contenu est accessible pour ledit passager entre un instant de départ du moyen de transport d'un lieu de départ du passager et un instant d'arrivée à un lieu de destination du passager, et **en ce que** le contenu est accessible pour le passager :
- si la requête comporte un identifiant de station de base située après le lieu de départ dans le trajet du moyen de transport, et
- si la requête comporte un identifiant de station de base située avant le lieu de destination dans le trajet du moyen de transport.

9. Procédé selon l'une des revendications précédentes, **caractérisé en ce que** le contenu requis est sélectionné parmi une pluralité de contenus, au moins en fonction de l'identifiant de passerelle.

10. Procédé selon l'une des revendications 6 et 8, **caractérisé en ce que** le contenu comporte des données d'un réseau social animé pour des passagers du moyen de transport, et **en ce que** les données du réseau social sont envoyées au moins en fonction de stations de base identifiées dans des requêtes transmises par lesdites stations de base.

11. Procédé selon l'une des revendications 2 à 10, **caractérisé en ce que** le contenu comporte des données d'un réseau social animé pour des passagers du moyen de transport, et **en ce qu'**une base des données d'index attribuée à un passager disposant de droits d'accès est supprimée à la fin d'un trajet du moyen de transport.

12. Serveur de vérification de droit d'accès à un contenu numérique, d'un passager d'un moyen de transport embarquant une passerelle, **caractérisé en ce qu'**il comporte des moyens informatiques pour, sur réception d'une requête du contenu issue d'un terminal du passager et transmise par la passerelle :
- comparer des données d'accès du passager audit contenu présentes dans la requête, à des données préalablement stockées dans une mémoire accessible au serveur de vérification, lesdites données préalablement stockées comportant un identifiant de moyen de transport,
- comparer l'identifiant de moyen de transport à un identifiant de passerelle présente dans la requête, et vérifier une correspondance entre l'identifiant de passerelle et l'identifiant de moyen de transport,
- en cas de correspondance entre les données d'accès et les données préalablement stockées d'une part, et de correspondance entre l'identifiant de passerelle et l'identifiant de moyen de transport d'autre part, décider de transmettre le contenu à destination du terminal.

13. Programme informatique **caractérisé en ce qu'**il comporte des instructions pour la mise en oeuvre du procédé selon l'une des revendications 2 à 6, 8, 10 et 11, lorsque ce programme est exécuté par un processeur du serveur de vérification.

## Patentansprüche

1. Verfahren zur Sicherung einer Übertragung eines digitalen Inhalts an ein Endgerät, das sich an Bord eines Transportmittels befindet und über ein lokales Netzwerk (LAN) mit einem Übergang (GW) verbunden ist, wobei der Übergang eine Abfrage des Inhalts überträgt, die von dem Endgerät kommt,
**dadurch gekennzeichnet, dass** der Übergang mit dem Transportmittel und mit einer Übergangskennung, die einer Kennung des Transportmittels entspricht, in Verbindung steht, und dadurch, dass der Übergang der Abfrage die Übergangskennung (F2) hinzufügt, mit dem Ziel einer Kohärenzprüfung zumindest der Übergangskennung, die mit dem Transportmittel (T4) in Verbindung steht.

2. Verfahren nach Anspruch 1, wobei der Inhalt für einen Passagier (UTI) des Transportmittels bestimmt ist, der ein Endgerät benutzt, und dem Passagier abgesicherte Zugangsrechte auf den Inhalt zugewiesen werden, **dadurch gekennzeichnet, dass** der Übergang:
- von dem Endgerät des Passagiers die Abfrage des Inhalts mit Zugangsdaten des Passagiers empfängt, und
- die Abfrage an einen entfernten Prüfserver überträgt, mit den Zugangsdaten einerseits und der Übergangskennung andererseits.

3. Verfahren nach Anspruch 2, **dadurch gekennzeichnet, dass** der Übergang ferner über ein Weitverkehrsnetz mit dem Prüfserver (SER) verbunden ist und der Prüfserver mit einem Server (SERC) des Inhalts verbunden ist, um die Zugangsdaten und die Übergangskennung vor der Übertragung des Inhalts an das Endgerät zu prüfen.

4. Verfahren nach einem der Ansprüche 2 und 3, **dadurch gekennzeichnet, dass** der Prüfserver Daten des Passagiers, die eine Kennung des Transportmittels umfassen, zum Vergleich mit den Zugangsdaten, die in der Abfrage empfangen wurden, speichert, und dadurch, dass der Prüfserver eine Kohärenz prüft zwischen:
- der Übergangskennung, die mit dem Transportmittel in Verbindung steht, einerseits, und
- den Zugangsdaten des Passagiers desselben Transportmittels andererseits.

5. Verfahren nach Anspruch 4, **dadurch gekennzeichnet, dass** es die Schritte umfasst, die bei dem Prüfserver ausgeführt werden:
- bei Erhalt einer Information über die Reservierung eines Tickets eines Passagiers in einem Transportmittel, Ermitteln, ob eine Bereitstellung eines Inhalts in diesem Transportmittel für diesen Passagier gewährt wurde, und, bei positiver Ermittlung, diesem Passagier Daten eines Zugangsrechts zu dem Inhalt zuweisen, und Speichern der Daten entsprechend mindestens einer Transportmittelkennung,
- bei Empfang einer Abfrage eines Inhalts, die eine Übergangskennung umfasst, Prüfen der Gültigkeit der Übergangskennung, indem versucht wird, das Transportmittel zu identifizieren, an Bord dessen sich der Übergang befindet, und, nach Identifizierung des Transportmittels, Prüfen, dass die Zugangsdaten zum Inhalt entsprechend einer Transportmittelkennung gespeichert sind, die dem Transportmittel entspricht, das von der Übergangskennung identifiziert wurde, und
- ferner, bei positiver Prüfung der Zugangsdaten, die in der Abfrage vorhanden sind, durch Vergleich mit den zuvor gespeicherten Zugangsdaten, Entscheiden, den Inhalt an das Endgerät zu übertragen.

6. Verfahren nach einem der Ansprüche 2 bis 5, **dadurch gekennzeichnet, dass**, da der Übergang über eine oder mehrere Basisstationen (BSi, BSj) mit dem Prüfserver verbunden ist und der Prüfserver einerseits eine Streckeninformation des Transportmittels und andererseits eine Information zu Positionen der Basisstationen speichert, die Abfrage von dem Prüfserver mit einer oder mehreren Kennungen einer oder mehrerer jeweiliger Basisstationen, die die Abfrage übertragen, empfangen wird, wobei der Prüfserver ferner eine Kohärenz zwischen der oder den Basisstationen, die in der Abfrage identifiziert wurden, und der Strecke des Transportmittels prüft.

7. Verfahren nach einem der vorhergehenden Ansprüche, **dadurch gekennzeichnet, dass** der Inhalt für den Passagier zwischen einem Abfahrtszeitpunkt des Transportmittels von einem Abreiseort des Passagiers und einem Ankunftszeitpunkt an einem Zielort des Passagiers zugänglich ist.

8. Verfahren nach Anspruch 6, **dadurch gekennzeichnet, dass** der Inhalt für den Passagier zwischen einem Abfahrtszeitpunkt des Transportmittels von einem Abreiseort des Passagiers und einem Ankunftszeitpunkt an einem Zielort, des Passagiers zugänglich ist, und dadurch, dass der Inhalt für den Passagier zugänglich ist:
- wenn die Abfrage eine Kennung einer Basisstation umfasst, die sich nach dem Abfahrtsort auf der Strecke des Transportmittels befindet, und
- wenn die Abfrage eine Kennung einer Basisstation umfasst, die sich vor dem Zielort auf der Strecke des Transportmittels befindet.

9. Verfahren nach einem der vorhergehenden Ansprüche, **dadurch gekennzeichnet, dass** der abgefragte Inhalt aus mehreren Inhalten, zumindest in Abhängigkeit von der Übergangskennung gewählt wird.

10. Verfahren nach einem der Ansprüche 6 und 8, **dadurch gekennzeichnet, dass** der Inhalt Daten eines animierten sozialen Netzwerks für Passagiere des Transportmittels umfasst, und dadurch, dass die Daten des sozialen Netzwerks zumindest in Abhängigkeit von Basisstationen versandt werden, die in Abfragen identifiziert werden, die von den Basisstationen übertragen werden.

11. Verfahren nach einem der Ansprüche 2 bis 10, **dadurch gekennzeichnet, dass** der Inhalt Daten eines animierten sozialen Netzwerks für Passagiere des Transportmittels umfasst, und dadurch, dass eine Indexdatenbank, die einem Passagier zugeordnet ist, der über Zugangsrechte verfügt, am Ende einer Strecke des Transportmittels gelöscht wird.

12. Server zur Prüfung eines Zugangsrechts eines Passagiers eines Transportmittels, das einen Übergang mitführt, zu einem digitalen Inhalt, **dadurch gekennzeichnet, dass** er Computermittel umfasst, um bei Empfang einer Abfrage des Inhalts, die von einem Endgerät des Passagiers kommt und von dem Übergang übermittelt wird:
- Zugangsdaten des Passagiers zu dem Inhalt, die in der Abfrage vorhanden sind, mit Daten zu vergleichen, die zuvor in einem Speicher gespeichert wurden, der für den Prüfserver zugänglich ist, wobei die zuvor gespeicherten Daten eine Transportmittelkennung umfassen,
- die Transportmittelkennung mit einer Übergangskennung zu vergleichen, die in der Abfrage vorhanden ist, und eine Übereinstimmung zwischen der Übergangskennung und der Transportmittelkennung zu prüfen,
- im Falle einer Übereinstimmung zwischen den Zugangsdaten und den zuvor gespeicherten Daten einerseits, und einer Übereinstimmung zwischen der Übergangskennung und der Transportmittelkennung andererseits, zu entscheiden, den Inhalt an das Endgerät zu übertragen.

13. Computerprogramm, **dadurch gekennzeichnet, dass** es Anweisungen für die Umsetzung des Verfahrens nach einem der Ansprüche 2 bis 6, 8, 10 und 11 umfasst, wenn dieses Programm von einem Prozessor des Prüfservers ausgeführt wird.

## Claims

1. Method for securing a transmission of a digital content to a terminal on board a transport means and linked to a gateway (GW) via a local area network (LAN), in which the gateway transmits a request for said content, said request arising from the terminal,
**characterized in that** the gateway is associated with the transport means and has a gateway identifier corresponding to an identifier of the transport means, and **in that** the gateway adds said gateway identifier (F2) to said request, with a view to a verification of consistency at least of the identifier of a gateway associated with the transport means (T4).

2. Method according to Claim 1, in which the content is intended for a passenger (UTI) of the transport means, who is a user of a terminal, and rights of secure access to the content are assigned to said passenger, **characterized in that** the gateway:
- receives from the passenger's terminal the request for the content with access data of the passenger, and
- transmits said request to a remote verification server, with the access data on the one hand, and the gateway identifier on the other hand.

3. Method according to Claim 2, **characterized in that** the gateway is furthermore linked to the verification server (SER) via a wide area network and the verification server is linked to a server (SERC) of said content so as to verify said access data and the gateway identifier before the transmission of the content to the terminal.

4. Method according to one of Claims 2 and 3, **characterized in that** the verification server stores data of the passenger comprising an identifier of the transport means, for comparison with the access data received in the request, and **in that** the verification server verifies a consistency between:
- on the one hand, the identifier of a gateway associated with the transport means, and
- on the other hand, the access data of the passenger of the same transport means.

5. Method according to Claim 4, **characterized in that** it comprises the steps implemented at the verification server:
- determining, on obtaining an information item in respect of the reservation of a ticket of a passenger in a transport means, whether provision of a content in this transport means has been granted for this passenger, and, in the case of positive determination, assigning data of right of access to said content to this passenger and storing said data in correspondence at least with an identifier of the transport means,
- verifying, on receipt of a request for a content comprising a gateway identifier, the validity of the gateway identifier by seeking to identify the transport means on board which the gateway is embedded, and verifying, after identification of the transport means, that the data for access to the content are recorded in correspondence with a transport means identifier corresponding to the transport means identified by the gateway identifier, and
- on positive verification, furthermore, of the access data present in the request, by comparison with the previously recorded access data, deciding to transmit the content to the terminal.

6. Method according to one of Claims 2 to 5, **characterized in that**, the gateway being linked to the verification server via one or more base stations (BSi, BSj), and the verification server storing, on the one hand an information item in respect of the journey of the transport means and, on the other hand an information item in respect of positions of the base stations, the request is received by the verification server with one or more identifiers of one or more respective base stations transmitting the request, the verification server furthermore verifying a consistency between the base station or stations identified in the request and the journey of the transport means.

7. Method according to one of the preceding claims, **characterized in that** the content is accessible for said passenger between an instant of departure of the transport means from a place of departure of the passenger and an instant of arrival at a place of destination of the passenger.

8. Method according to Claim 6, **characterized in that** the content is accessible for said passenger between an instant of departure of the transport means from a place of departure of the passenger and an instant of arrival at a place of destination of the passenger, and **in that** the content is accessible for the passenger:
- if the request comprises an identifier of a base station situated after the place of departure in the journey of the transport means, and
- if the request comprises an identifier of a base station situated before the place of destination in the journey of the transport means.

9. Method according to one of the preceding claims, **characterized in that** the content requested is selected from among a plurality of contents, at least as a function of the gateway identifier.

10. Method according to one of Claims 6 and 8, **characterized in that** the content comprises data of a social network which is enabled for passengers of the transport means, and **in that** the data of the social network are dispatched at least as a function of base stations identified in requests transmitted by said base stations.

11. Method according to one of Claims 2 to 10, **characterized in that** the content comprises data of a social network which is enabled for passengers of the transport means, and **in that** an index database allocated to a passenger having access rights is deleted at the end of a journey of the transport means.

12. Verification server for verifying the right of access to a digital content of a passenger of a transport means on board which a gateway is embedded, **characterized in that** it comprises computing means for, on receipt of a request for the content, said request arising from a terminal of the passenger and being transmitted by the gateway:
- comparing data of access of the passenger to said content which are present in the request, with data previously stored in a memory accessible to the verification server, said previously stored data comprising a transport means identifier,
- comparing the transport means identifier with a gateway identifier present in the request, and verifying a correspondence between the gateway identifier and the transport means identifier,
- in the case of correspondence between the access data and the previously stored data on the one hand, and of correspondence between the gateway identifier and the transport means identifier on the other hand, deciding to transmit the content to the terminal.

13. Computer program **characterized in that** it comprises instructions for the implementation of the method according to one of Claims 2 to 6, 8, 10 and 11, when this program is executed by a processor of the verification server.
